(19) Europäisches Patentamt
European Patent Office
Office européen des brevets

(11) EP 2 382 772 B1

(12) **EUROPEAN PATENT SPECIFICATION**

(45) Date of publication and mention
of the grant of the patent:
**03.10.2012 Bulletin 2012/40**

(51) Int Cl.:
*H04N 5/44* (2011.01)    *G06T 3/40* (2006.01)

(21) Application number: **09796462.1**

(22) Date of filing: **16.12.2009**

(86) International application number:
**PCT/IB2009/055793**

(87) International publication number:
**WO 2010/073192 (01.07.2010 Gazette 2010/26)**

(54) **IMAGE SCALING CURVE GENERATION**

BILDSKALIERUNGS-KURVENERZEUGUNG

CRÉATION DE COURBE DE MISE À L'ÉCHELLE D'IMAGE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **23.12.2008 EP 08306006**

(43) Date of publication of application:
**02.11.2011 Bulletin 2011/44**

(73) Proprietor: **TP Vision Holding B.V.**
**5656 AE Eindhoven (NL)**

(72) Inventors:
• **DE HAAN, Gerard**
  **NL-5656 AE Eindhoven (NL)**
• **DAMKAT, Chris**
  **NL-5656 AE Eindhoven (NL)**

(74) Representative: **Coops, Peter**
**Philips Intellectual Property & Standards**
**P.O. Box 220**
**5600 AE Eindhoven (NL)**

(56) References cited:
**WO-A1-2005/060243    US-B1- 7 158 158**

• **DAW-SEN HWANG ET AL: "Content-aware image resizing using perceptual seam carving with human attention model" MULTIMEDIA AND EXPO, 2008 IEEE INTERNATIONAL CONFERENCE ON, IEEE, PISCATAWAY, NJ, USA, 23 June 2008 (2008-06-23), pages 1029-1032, XP031312900 ISBN: 978-1-4244-2570-9**
• **AVIDAN S ET AL: "Seam carving for content-aware image resizing" ACM TRANSACTIONS ON GRAPHICS, ACM, US LNKD- DOI: 10.1145/1276377.1276390, vol. 26, no. 3, 1 July 2007 (2007-07-01), pages 10-1, XP007904203 ISSN: 0730-0301**
• **MIKE KNEE & ROBERTA PIRODDI: "White Paper: 'Aspect Processing - The Shape of Things to Come'" INTERNET CITATION 12 September 2008 (2008-09-12), XP007908406 Retrieved from the Internet: URL:http://www.snellwilcox.com/features/ib c/whitepapers.php> [retrieved on 2009-05-04]**

**Description**

**TECHNICAL FIELD**

The present invention relates to a method of generating an image scaling curve for correcting aspect ratio of an image or image sequence. More specifically, the method relies on detecting local saliency in an image. The invention equally relates to a corresponding apparatus and a computer program product comprising instructions for implementing the steps of the method.

**BACKGROUND OF THE INVENTION**

Recent developments in the field of display technologies have seen great diversity in display sizes. Displays vary from low resolution hand-held devices to high definition wide-screen TVs. Computing and communications infrastructures are also evolving to support images and video into this ever expanding set of potential displays. Visual content is becoming more important for sharing, expressing, and exchanging information on devices such as cell phones and hand-held personal computers (PCs), personal digital assistants (PDAs) with video capabilities and home-networked media appliances. The same content is required to be displayed in different dimensions and aspect ratio for different devices. Standard image processing methods of scaling and cropping are not proving to be sufficient. The aspect ratio is understood as being the ratio of a width of an image to a height of the image.

With the use of computers to generate or convert video files it can be often seen that the resulting video becomes distorted. This is usually caused by inappropriate operation of the involved software by an inexperienced user - it requires quite a bit of knowledge about computer and video, such as understanding that TV systems use a non-square pixel aspect ratio.

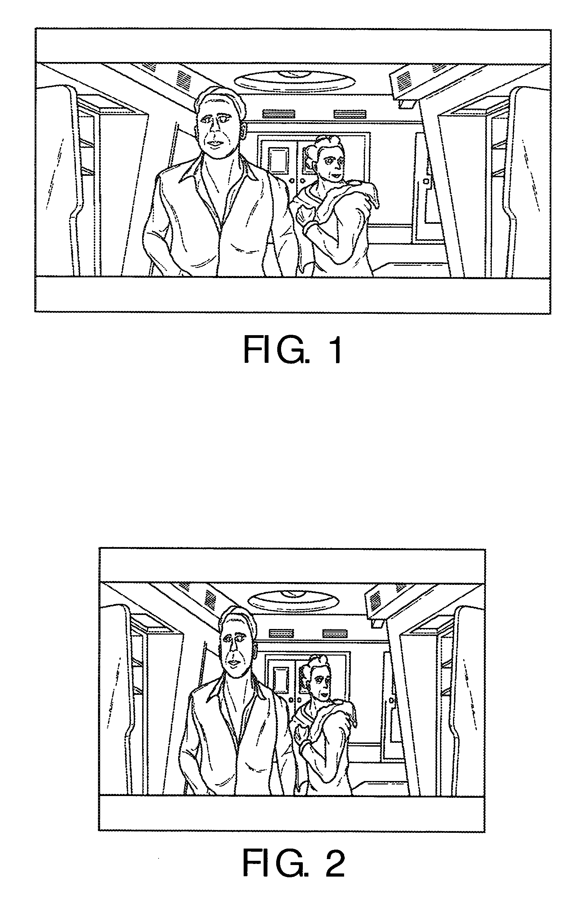

Furthermore, legacy computer video file formats such as the audio video interleave (AVI) container lack the appropriate means to store aspect ratio information. A typical example of this problem are wide screen digital versatile discs (DVDs) converted into computer files, played on a TV, for instance via digital living network alliance (DLNA). Often movies are stored in anamorphic wide screen format. Unless care is taken during conversion into a computer file, the resulting movie will be rendered distorted during playback as can be seen by comparing Figures 1 and 2. Figure 1 illustrates a wide screen movie image in the correct aspect ratio, whereas Figure 2 shows the same image when incorrectly processed on a computer. In this figure the characters and objects are clearly distorted.

With the popularity of wide-screen TVs, efficient solutions which could effectively display video on displays other than originally intended is needed. Traditionally TVs implement a method called "black bar detection" to automatically adjust the aspect ratio. The video is scaled vertically in such a way that the black bars disappear. This is especially done in modem wide screen flat TVs.

US patent 7,339,627 by Brian Schoner et al. describes a method for aspect ratio correction based on black bars surrounding the image. While applied in TVs in the market, this method has the disadvantage that it fails if the source video is encoded incorrectly (such as many videos downloaded from the Internet show), or for movies in 2.35:1 movie aspect ratio, which requires to be shown with black bars even on a 16:9 widescreen TV.

In Philips TVs, a technique of *Panoramic Stretch* is used, where the boundaries of image are stretched to take up the wider screen. Although the assumption on which the method is based, i.e. most essential information is in the centre view, is often a good one, there may be cases where such an anisotropic stretch is not the optimal solution. Better methods are desired enabling effective resizing for a variety of displays.

Aspect ratio correction may not be enough to render the image suitable for viewing. Image retargeting can also be invoked. Retargeting is scaling the image while taking the content, the important objects in the scene, in consideration. It is therefore often called content-aware resizing. The image retargeting in certain implementations first consist of image cropping and then scaling. The video retargeting problem is more challenging than image targeting. Due to motion and camera movement, determining important aspects of video is difficult. Moreover, maintaining temporal consistency, when important aspects change dynamically, is demanding. Fortunately, what is important to preserve depends highly on low-level visual saliency which can be modelled quite well, but in some cases it can even depend on high level aspects of the underlying story.

The proposed prior art methods for content-aware aspect ratio correction or retargeting, usually lack temporal consistency, are computationally complex, or introduce unacceptable distortions in some cases.

It is thus the object of the present invention to overcome the above-identified difficulties and disadvantages by proposing an improved solution for image or video processing.

**SUMMARY OF THE INVENTION**

According to a first aspect of the invention, there is provided a method of generating an image scaling curve, the method comprising:

- receiving an image;
- detecting local saliency in the received image;
- accumulating the local saliency in a first direction; and
- deriving an image scaling curve from the accumulated local saliency, wherein the derived image scaling curve is suitable for image rescaling in a second direction which is substantially orthogonal to the first direction.

Thus, the present invention provides a very efficient method for generating an image scaling curve. Furthermore, the proposed method does not rely on meta data. The proposed method does not rely on knowledge of aspect ratio or orientation of the picture (or video) as the method automatically determines from the image itself important objects, regions and/or pixels. The present invention is of special interest because of recent plans to introduce ultra wide-screen TV (21:9). It is likely that the old Panoramic Stretch no longer suffices to upscale legacy content. On the other hand, current more advanced methods from the literature suffer from serious flaws for TV-viewing and are often too costly.

According to a second aspect of the invention, there is provided a computer program product comprising instructions for implementing the method according to the first aspect of the invention when loaded and run on computer means of an apparatus.

According to a third aspect of the invention, there is provided an apparatus for generating an image scaling curve, the apparatus comprising:

- a receiver for obtaining an image;
- a saliency detector for detecting local saliency of the received image;
- an accumulator for accumulating the local saliency in a first direction; and
- a curve generator for deriving an image scaling curve from the local saliency, wherein the derived scaling curve is suitable for image rescaling in a second direction which is substantially orthogonal to the first direction.

Other aspects of the invention are recited in the dependent claims attached hereto.

## BRIEF DESCRIPTION OF THE DRAWINGS

Other features and advantages of the invention will become apparent from the following description of non-limiting exemplary embodiments, with reference to the appended drawings, in which:

- Figure 1 shows a still image of a wide screen movie shown in the correct aspect ratio;
- Figure 2 shows the same image of Figure 1, but incorrectly processed;
- Figure 3 shows three different local magnification curves;
- Figure 4 shows an image divided into eight vertical sections and four horizontal sections;
- Figure 5 illustrates the usage of a nonlinear position transformation curve;
- Figure 6 shows a scaled image obtained by the nonlinear position transformation curve of Figure 5;
- Figure 7 is a simplified block diagram illustrating an apparatus in accordance with an embodiment of the present invention capable of performing aspect ratio correction;
- Figures 8-11 show different magnification curves obtained by using the method in accordance with an embodiment of the present invention;
- Figure 12 is a flow chart illustrating a first embodiment for correcting aspect ratio in accordance with the present invention;
- Figure 13 is a flow chart illustrating a second embodiment for correcting aspect ratio in accordance with the present invention; and
- Figure 14 is another flow chart illustrating the second embodiment for correcting aspect ratio in accordance with the present invention.

## DETAILED DESCRIPTION OF EMBODIMENTS OF THE INVENTION

One embodiment of the present invention is based on an idea of having a set of initial scaling curves and then cost values are calculated for these curves. A new scaling curve to be used in the actual image scaling is calculated so that it results as a weighted average of the individual curves where the weights are inversely related to the aforementioned cost. Thus, by looking at the video sequence itself, the system does not rely on any meta-data that, if available, could even be wrong.

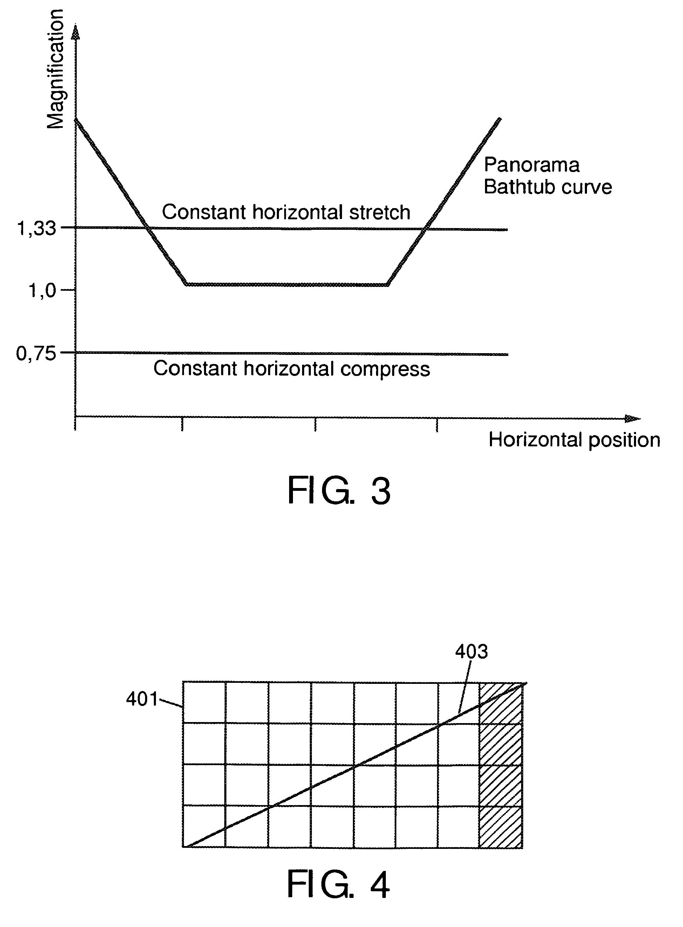

Figure 3 shows three exemplary scaling curves and more specifically magnification curves describing local magnification. These curves are: one linear scaling curve with constant magnification multiplier, one linear scaling curve with negative multiplier and the so called "bathtub" curve used in the Panoramic Stretching. The shape of the bathtub curve is such that the unity scaling is used at the centre of the image, whereas the magnification increases toward the edges of the image. Unity scaling at the centre of the image means that the objects at the centre of the image remain undistorted. Usually magnification is between 0.5 and 2.0

Figures 4, 5 and 6 illustrate nonlinear image scaling by use of a nonlinear scaling curve and more specifically position transformation (or mapping) curve. The position transformation curve results as the integral of the magnification curve. Figure 4 shows an image 401 divided into eight vertical sections with equal width and four horizontal sections with equal width. There is also shown a line 403 from one corner of the image to the opposite corner.

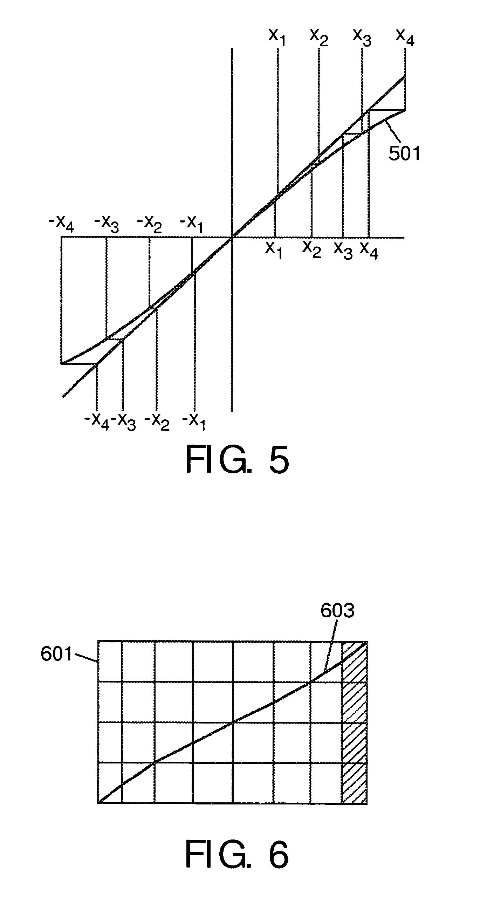

To arrive at a nonlinearly scaled image 601 as shown in Figure 6, a nonlinear position transformation curve 501 is used as shown in Figure 5. Figure 5 clearly shows an image scaling curve, i.e. position transformation curve, which results as the integral of the magnification curve. A horizontal/vertical magnification curve has to be integrated over the horizontal/vertical positions to result in a horizontal/vertical position transformation curve. In the figure it can further be seen that near the edges of the image, the vertical sections become narrower, whereas close to the centre, the horizontal sections remain unchanged. By using this kind of curve, it is assumed that the most important information of the image is located near the centre of the image. In Figure 6, the straight line 403 of a slant angle is displayed as a curve 603 due to the nonlinear scaling in the horizontal direction.

However, it is to be noted that the most relevant information is not always located near the centre of the image. For this purpose the present invention proposes a new solution, where different scaling curves can be advantageously used.

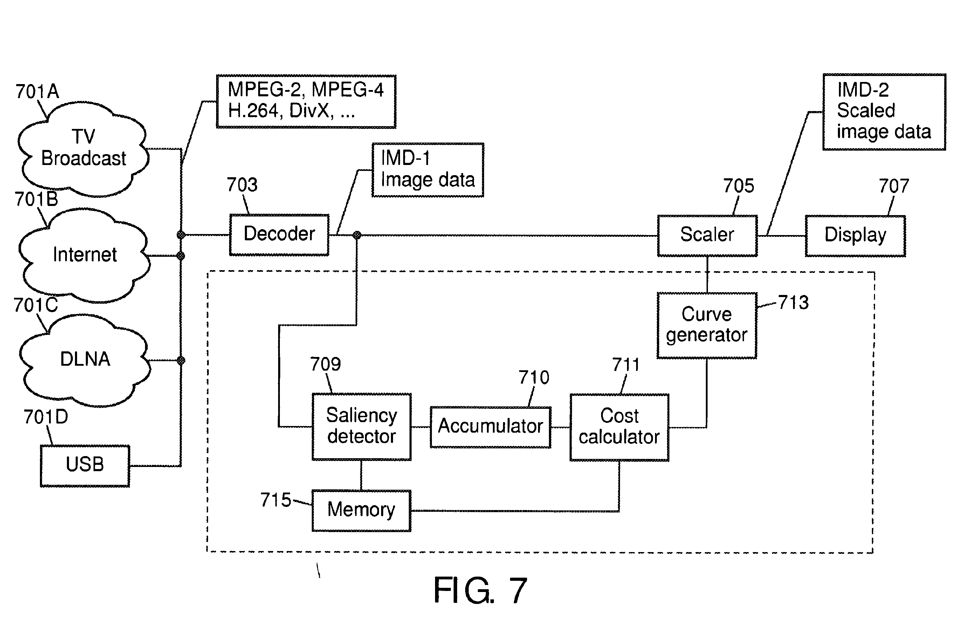

Figure 7 illustrates an electrical apparatus, such as a TV, arranged for performing image or video aspect ratio correction in accordance with the present invention. The TV has a variety of input sources, namely TV broadcast 701A, Internet 701B, DLNA 701C and universal serial bus (USB) 701D. Those input sources are transporting video in a compressed format, such as MPEG-2, MPEG-4 or other formats. The decoder 703 generates raw image data IMD-1, a stream of pictures, one picture per frame. This image data is fed into the scaler 705, which resizes the picture for the proper resolution to be shown on the display 707. The blocks 703, 705 and 707 describe a traditional liquid crystal display (LCD) TV in a very simplified form.

In accordance with an embodiment of the present invention, there is further provided the following units: saliency detector 709, accumulator 710, cost calculator 711, curve generator 713 and memory 715. The decoded image data from the decoder 703 is not only fed into the scaler 705 but is fed in parallel into the saliency detector 709, which is arranged to detect salient features, also referred to as local saliency, in images. The salient features reflect the perceived distortion in the image in case the corresponding image segment is stretched or shrunk. In this example the saliency detector 709 makes use of what is known to the person skilled in the art as "computer vision library". A computer vision library is a library of programming functions stored in the memory 715 mainly aimed at real time computer vision. These functions can e.g. detect people's faces and especially certain features such as eyes or lips. Round structures, such as wheels and watches, can also be detected relatively easily. The exact definition of the object depends on the particular computer vision library used for the saliency detector 709. Instead of relying on the computer vision library, a simpler method could be used as well, such as detecting edges in the images.

Information about the local saliency is fed into the accumulator 710 which is arranged to accumulate the detected local saliency in one direction (horizontal or vertical) as will be explained later in more detail. From the accumulator 710 the accumulated local saliency is fed into the cost calculator 711. The cost calculator is arranged to calculate costs for different scaling curves stored in the memory 715. In this example the memory 715 also contains a set of initial horizontal and/or vertical scaling curves that include the standard curve, i.e. the "bathtub" curve, of the Panoramic Stretching, but also some curves that might be suitable in cases where the standard curve fails. This happens mainly when most important object(s) are near the side panels of the screen. The number of stored initial scaling curves is at least 2, but smaller than the number of pixels in the image. In most applications the usage of 3-10 initial scaling curves suffices.

Given the salient features or local saliency of the current image, a "cost" for each of these initial curves can be calculated. The cost of a scaling curve depends on the position of essential objects such as faces, moving objects, etc., in the image, such that the cost increases the more the local scaling factor differs from unity scaling (scaling factor 1) particularly at the position of these essential objects. In other words, a high number of salient features in locations where the scaling factor differs from 1 leads to a high cost value. For the calculation of the cost values, the salient features in locations where the scaling factor is 1 can be neglected.

The curve generator 713 is arranged to calculate the scaling curve, i.e. the position transformation curve, to be used in the actual image rescaling as a weighted average of the individual curves where the weights are inversely related to the aforementioned cost. This means that the weights are decreasing with increasing cost of a predefined scaling curve. All candidate curves (both horizontal and vertical scaling curves) individually cause the desired aspect ratio change. In this case when the sum of the weights equals 1 the resulting curves will also lead to the desired aspect ratio change. In case the input video sequence has a good temporal stability (no scene change), the weights will only change gradually causing also the output retargeted video to be temporally stable. In the event of low temporal stability of the input video (scene change), the output can react immediately to the updated cost without remaining effects from the previous scene. Consequently, the so much appreciated temporal stability of the proposed rescaling method does not prohibit rapid adaptation to the new shot. Moreover, by selecting the initial curves more or less ambitiously (i.e. the curves differ from the standard curve) it can be guaranteed that the artefacts of the aspect ratio correction are modest.

Tables 1-4 illustrate concrete examples for calculating the correct magnification curve to be used in the image scaling. In the tables each column represents a specific horizontal location in the image. For simplicity the predefined scaling curves in these examples use only two different magnification values, namely values 1 and 2. These magnification values can also be referred to as local magnification values or local scaling curves in more general. Thus, the predefined scaling curves can be considered as consisting of several local scaling curves that can be considered as glued together. The predefined set of scaling curves contains three scaling curves in each example. The quality figure shown in the tables is inversely related to the cost values, which are calculated for each curve in the predefined set by taking into account the local saliency in the image as was explained above. For the final scaling curve, for each location Y the resulting magnification in one direction, i.e. horizontal or vertical, can be calculated by using the following formula:

$$\sum_{X=1}^{Number\_of\_curves} QUALITY\_FIGURE_{Curve\_X} \cdot MAGNIFICATION_{Location\_Y} \cdot$$

*Table 1- example 1*

|  | Quality figure | MAGNIFICATION | | | | | | | | |
|---|---|---|---|---|---|---|---|---|---|---|
| Curve 1 | 1,00 | 1 | 1 | 1 | 1 | 1 | 1 | 2 | 2 | 2 |
| Curve 2 | 10,00 | 1 | 1 | 1 | 2 | 2 | 2 | 1 | 1 | 1 |
| Curve 3 | 1,00 | 2 | 2 | 2 | 1 | 1 | 1 | 1 | 1 | 1 |
|  | **Result** | **1.08** | **1.083** | **1.083** | **1.833** | **1.833** | **1.833** | **1.083** | **1.083** | **1.083** |

*Table 2 - example 2*

|  | Quality figure | MAGNIFICATION | | | | | | | | |
|---|---|---|---|---|---|---|---|---|---|---|
| Curve 1 | 10,00 | 1 | 1 | 1 | 1 | 1 | 1 | 2 | 2 | 2 |
| Curve 2 | 1,00 | 1 | 1 | 1 | 2 | 2 | 2 | 1 | 1 | 1 |
| Curve 3 | 1,00 | 2 | 2 | 2 | 1 | 1 | 1 | 1 | 1 | 1 |
|  | **Result** | **1.08** | **1.083** | **1.083** | **1.083** | **1.083** | **1.083** | **1.833** | **1.833** | **1.833** |

*Table 3 - example 3*

|  | Quality figure | MAGNIFICATION | | | | | | | | |
|---|---|---|---|---|---|---|---|---|---|---|
| Curve 1 | 10,00 | 1 | 1 | 1 | 1 | 1 | 1 | 2 | 2 | 2 |
| Curve 2 | 10,00 | 1 | 1 | 1 | 2 | 2 | 2 | 1 | 1 | 1 |
| Curve 3 | 1,00 | 2 | 2 | 2 | 1 | 1 | 1 | 1 | 1 | 1 |
|  | **Result** | **1.05** | **1.047** | **1.047** | **1.476** | **1.476** | **1.476** | **1.476** | **1.476** | **1.476** |

*Table 4 - example 4*

|  | Quality figure | MAGNIFICATION | | | | | | | | |
|---|---|---|---|---|---|---|---|---|---|---|
| Curve 1 | 10,00 | 1 | 1 | 1 | 1 | 1 | 1 | 2 | 2 | 2 |

(continued)

| | Quality figure | MAGNIFICATION | | | | | | | | |
|---|---|---|---|---|---|---|---|---|---|---|
| Curve 2 | 1,00 | 1 | 1 | 1 | 2 | 2 | 2 | 1 | 1 | 1 |
| Curve 3 | 10,00 | 2 | 2 | 2 | 1 | 1 | 1 | 1 | 1 | 1 |
| | **Result** | **1.48** | **1.476** | **1.476** | **1.047** | **1.047** | **1.047** | **1.476** | **1.476** | **1.476** |

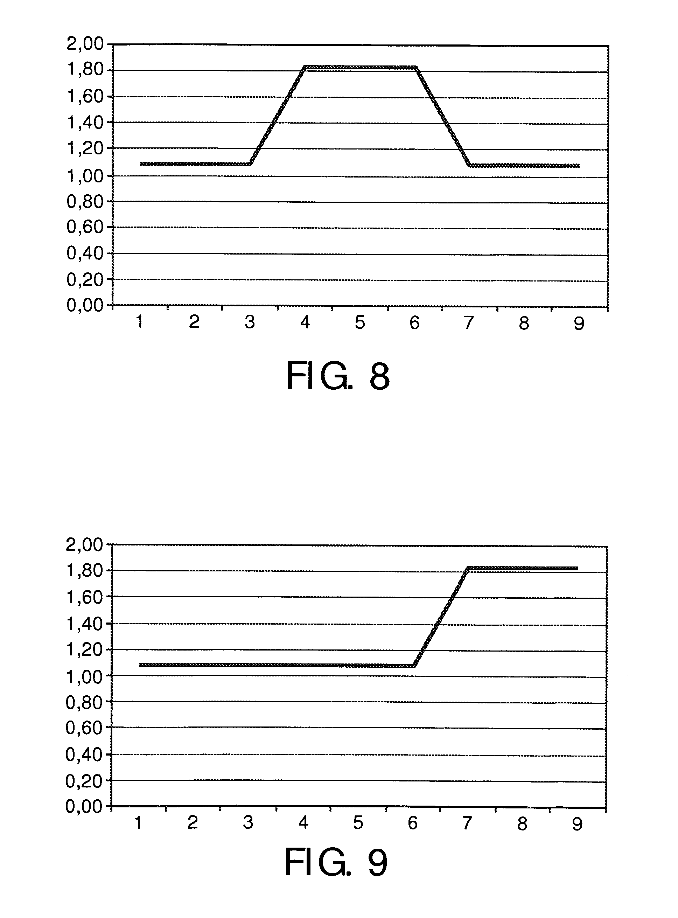

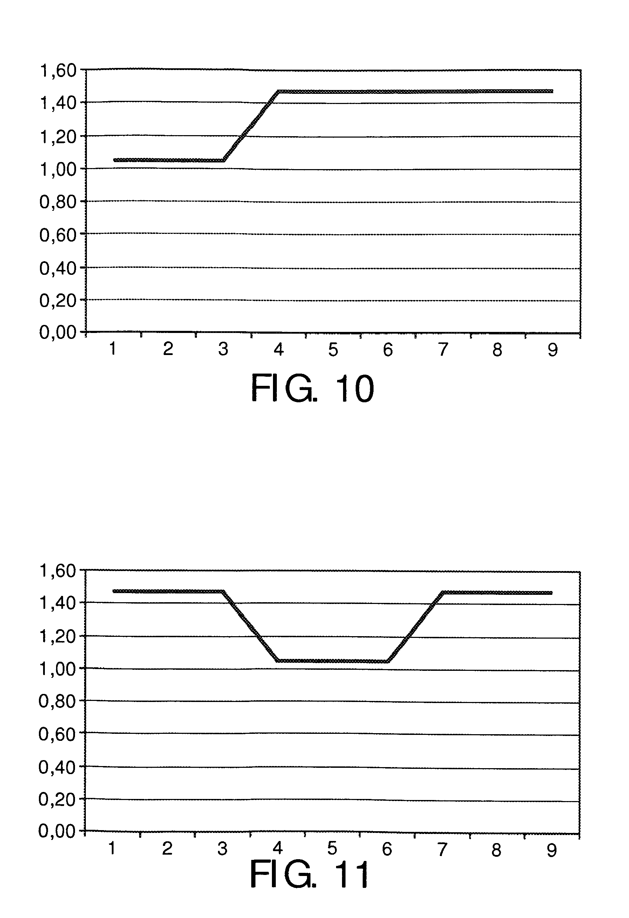

The resulting final magnification curves for Tables 1, 2, 3 and 4 are shown in Figures 8, 9, 10 and 11, respectively. The curves shown in Figures 8, 9, 10 and 11 exhibit abrupt changes in magnification and for this reason in order to avoid unacceptable distortions, these curves may have to be smoothed e.g. by filtering or starting from smooth curves.

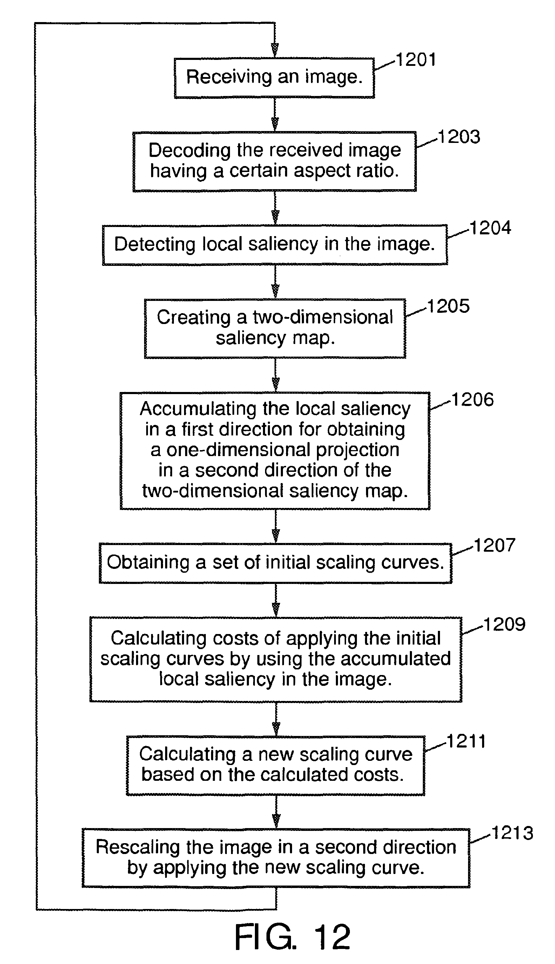

Figure 12 illustrates a flow chart describing the first embodiment of rescaling an image in accordance with an embodiment of the present invention. An image is first received in step 1201. Then in step 1203 the decoder 703 decodes the image having a certain aspect ratio. The saliency detector 709 detects in step 1204 local saliency of the image. For this purpose the computer vision library can be invoked. Once the local saliency is detected, then a two-dimensional saliency map can be created in step 1205. By using the saliency map, the local saliency is then accumulated in step 1206 in a first direction, such as vertical direction, for obtaining a one-dimensional projection in a second direction (horizontal in this example) of the two-dimensional saliency map. The projection into one direction also covers the situation where the projection takes place over columns (or rows) that are wider than a single pixel line. In other words, the projection projects the local saliency of individual pixels in the received image, or a combination of local saliencies over a group of pixels orthogonal to the accumulation direction. The combination of local saliencies can for instance allow using a median or weighted average.

In step 1207, a set of initial scaling curves is obtained. These curves can be stored in the memory 715. Then in step 1209 costs are calculated for the different initial curves as explained above by taking into account the local saliency in the image. In step 1211 a new scaling curve is calculated based on the calculated costs. Finally in step 1213 the image is rescaled in a second direction (horizontal direction in this example) by the scaler 705 by applying the new scaling curve. The image is now ready to be displayed to the user. The second direction is substantially orthogonal to the first direction. It is to be noted that in the example above scaling was applied in just one direction, but is equally possibly to apply scaling in both horizontal and vertical directions. If the scaling is done in both of these directions, then the scaling apparatus shown in Figure 7 may comprise two separate scalers in cascade, i.e. one scaler in each direction.

Naturally not every scene or picture of a video sequence will have objects that can be recognised by a computer. This is not an issue since the aspect ratio usually remains constant throughout a large part of it, if not the whole video sequence. This also means that for performance reasons the method does not rely on monitoring all video frames i.e. images, but can sample every x-th frame.

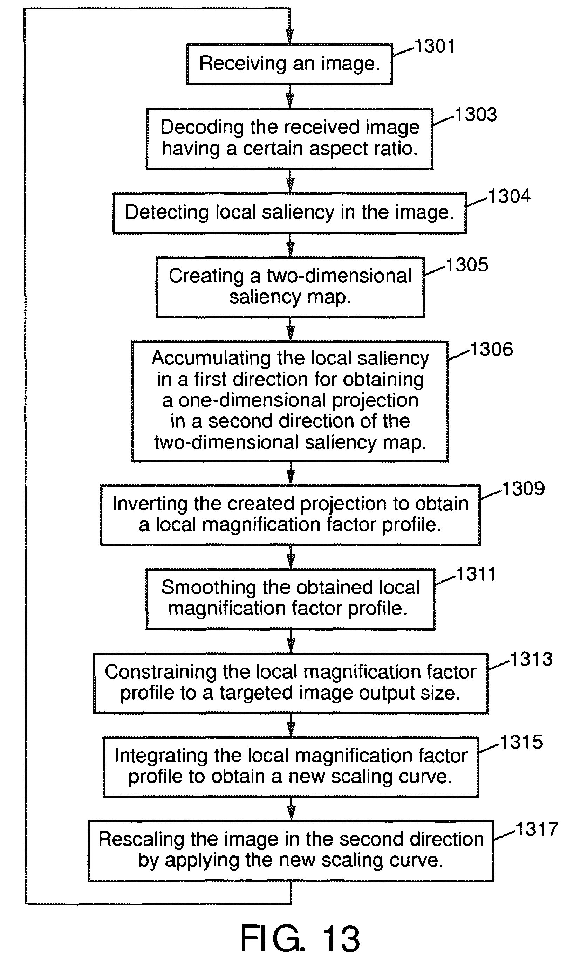

The flow chart of Figure 13 illustrates the second embodiment in accordance with the present invention. Steps 1301, 1303, 1304, 1305 and 1306 correspond to steps 1201, 1203, 1204, 1205 and 1206, respectively. In step 1306 the one-dimensional projection in the second direction is obtained. In this projection, peaks indicate the location of the salient features. Next the created projection is inverted in step 1309 to obtain a local magnification factor profile. The inversion is done since for salient features a magnification factor close to one (i.e. no extra magnification) is desirable. The local magnification profile is also advantageously smoothed in step 1311.

In order to match the local magnification factor profile to a targeted image, it is constrained in step 1313 by adapting the profile so that the integral of the profile matches the desired output size while limiting the minimum and maximum magnification values of the local magnification factor profile. The present method can be used for both enlarging and compressing the image. The minimum scaling factor is 1 if the image is enlarged. On the other hand, the maximum scaling factor is 1, if the image is compressed. Next in step 1315 the local magnification factor profile is integrated to obtain the final scaling curve. Finally in step 1317 the image is rescaled in a second direction by applying the final scaling curve. Again the second direction is substantially orthogonal to the first direction.

Depending on the implementation details, it is possible to end up with a scaling curve where the input pixels should go into the output. However, if there are more output pixels than input pixels then some output pixels are unassigned. This issue can be solved by simple interpolation.

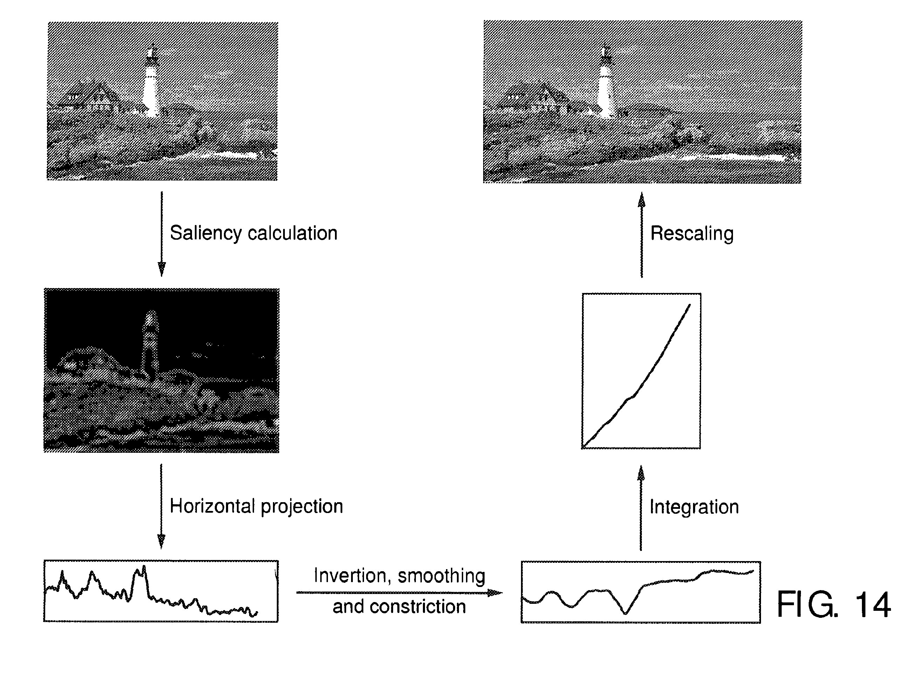

The flow chart of Figure 13 can be better understood when considered together with Figure 14. In the upper left corner there is shown the received image which needs to be rescaled. Once the saliency has been detected, the two-dimensional saliency map is obtained as shown in the image, the blurred image illustrating the saliency map. The local magnification factor profile is then obtained from the horizontal projection of the saliency map. In other words, the local saliency is accumulated in vertical direction for obtaining the horizontal projection. In this profile there can be seen peaks where in the received image there are the house and the lighthouse. The profile is then inverted, smoothed and constrained. The inverted profiled is then integrated from left to right to obtain the final scaling curve. If the slope of the resulting curve is 45 degrees, then this corresponds to unity magnification as this curve gives the image input conversion into image output. Finally the output image (upper right corner in Figure 14) is obtained by applying the obtained final scaling curve to the received image.

It should be noted that the term "accumulation" used above or in the claims does not limit the actual implementation of the calculation of the projections and costs. Most evidently, the linearity of the calculations in the steps performed for the saliency projection and the cost of the scaling curves allows for several implementation options. As an illustration: in the calculation of the cost of initial scaling curves this can mean that first the saliency is accumulated and later multiplied with the local magnification curve, or alternatively first the saliency can be multiplied with the local magnification and later accumulated. These are mathematically identical because of the linearity of the operations and the constancy of the local magnification in the direction of accumulation.

Besides the above, it can be imagined that accumulation is not limited to a simple sum or average of the saliency in a direction, it can be imagined that instead of these measures the median, maximum or a weighted sum is used. In other words: other kinds of projections can be used, for instance maximum (saliency) projection, where the maximum in a direction is projected. Furthermore, sub-sampling schemes can be imagined or parts of the image might be discarded all together. For instance, subtitle areas or logos might be discarded in the accumulations.

The present invention can be applied in display products such as TVs, monitors, projectors, especially when they are designed to play videos that could originate from a computer, such as DLNA, Internet TV, USB and so forth. Another application where this invention is very beneficial is the area of "User Generated Content" on the Internet, i.e. websites such as YouTube. Due to the popularity of such services, the website has to deal with a large number of poorly generated content, amongst which are videos that are uploaded with wrong aspect ratios. Implementing the method described in this invention, the website would apply the algorithm to uploaded videos and correct any distortions due to incorrect aspect ratio before processing them further.

The invention also relates to a computer program product that is able to implement any of the method steps as described above when loaded and run on computer means of an image resizing apparatus. The computer program may be stored/distributed on a suitable medium supplied together with or as a part of other hardware, but may also be distributed in other forms, such as via the Internet or other wired or wireless telecommunication systems.

The invention also relates to an integrated circuit that is arranged to perform any of the method steps in accordance with the embodiments of the invention.

While the invention has been illustrated and described in detail in the drawings and foregoing description, such illustration and description are to be considered illustrative or exemplary and not restrictive, the invention being not restricted to the disclosed embodiments. Other variations to the disclosed embodiments can be understood and effected by those skilled in the art in practicing the claimed invention, from a study of the drawings, the disclosure and the appended claims. For instance, not all the steps shown in the flow charts need to be performed. More specifically, if the object is to simply obtain an image scaling curve, then the actual image scaling is not necessary.

In the claims, the word "comprising" does not exclude other elements or steps, and the indefinite article "a" or "an" does not exclude a plurality. A single processor or other unit may fulfil the functions of several items recited in the claims. The mere fact that different features are recited in mutually different dependent claims does not indicate that a combination of these features cannot be advantageously used. Any reference signs in the claims should not be construed as limiting the scope of the invention.

**Claims**

1.   A method of generating an image scaling curve, the method comprising:

- receiving (1201; 1301) an image;
- detecting (1204; 1304) local saliency in the received image;
- accumulating (1206; 1306) the local saliency in a first direction; and
- deriving (1211; 1315) an image scaling curve from the accumulated local saliency, wherein the derived image scaling curve is suitable for image rescaling in a second direction which is substantially orthogonal to the first direction.

2.   A method according to claim 1, further comprising rescaling (1213; 1317) the image in the second direction by using the derived scaling curve.

3.   A method according to any one of claims 1 to 2, wherein detecting local saliency comprises creating a two-dimensional saliency map.

4. A method according to any of the preceding claims, wherein the local magnification of the scaling curve approaches unity when the corresponding accumulated local saliency in the first direction increases.

5. A method according to any one of the preceding claims, wherein accumulating the local saliency comprises creating a one-dimensional projection in the second direction of the two-dimensional saliency map, wherein the projection projects the local saliency of individual pixels in the received image, or a combination of local saliencies over a group of pixels orthogonal to the accumulation direction.

6. A method according to claim 5, wherein deriving a scaling curve comprises:

   - inverting (1309) the created projection to obtain a local magnification factor profile;
   - smoothing (1311) the obtained local magnification factor profile;
   - constraining (1313) the local magnification factor profile to a targeted image output size by adapting the profile so that the integral of the profile matches the desired output size while limiting the minimum and maximum magnification values of the local magnification factor profile; and
   - integrating (1315) the scaling profile to obtain the image scaling curve.

7. A method according to any one of claims 1 to 5, wherein deriving the scaling curve comprises:

   - providing (1207) a set of initial image scaling curves for mapping pixels from the received image to an image to be output;
   - calculating (1209) cost values for at least some of the provided initial image scaling curves, the cost values being based on the local magnification of the provided initial image scaling curve and the accumulated local saliency in the first direction to which the provided initial image scaling curve is applied; and
   - deriving (1211) the image scaling curve from the calculated cost values.

8. A method according to claim 7, wherein the provided initial image scaling curves consist of concatenated and smoothed local image scaling curves.

9. A method according to any one of claims 7 to 8, wherein the image scaling curve results as a weighted average of the provided initial image scaling curves where the weights are decreasing with increasing cost of a provided initial image scaling curve.

10. A method according to any of the preceding claims, wherein the local saliency reflects the perceived distortion in the image in case the corresponding image segment is stretched or shrunk.

11. A method according to any one of the preceding claims, wherein a sequence of images is received and the method is applied to at least some images of that sequence.

12. A method according to claim 11, wherein the detection, accumulation and derivation steps of the method are applied only to every x-th image of the image sequence.

13. An apparatus for generating an image scaling curve, the apparatus comprising:

   - a receiver (701 A; 701B; 701C; 701D; 703) for obtaining an image;
   - a saliency detector (709) for detecting local saliency of the received image;
   - an accumulator (710) for accumulating the local saliency in a first direction;
   and
   - a curve generator (713) for deriving an image scaling curve from the local saliency, wherein the derived scaling curve is suitable for image rescaling in a second direction which is substantially orthogonal to the first direction.

14. An apparatus according to claim 13, further comprising a memory (715) for providing a set of initial image scaling curves and a cost calculator (711) for calculating cost values for at least some of the provided image scaling curves.

15. An apparatus according to any one of claims 13 to 14, further comprising a scaler (705) for rescaling the image in a second direction by using the derived image scaling curve.

**Patentansprüche**

1. Verfahren zum Erzeugen einer Bildskalierungskurve, wobei das Verfahren umfasst:

   Empfangen (1201; 1301) eines Bildes;
   Erfassen (1204; 1304) einer lokalen Auffälligkeitsstelle in dem empfangenen Bild;
   Akkumulieren (1206; 1306) der lokalen Auffälligkeitsstelle in einer ersten Richtung; und
   Herleiten (1211; 1315) einer Bildskalierungskurve aus der akkumulierten lokalen Auffälligkeitsstelle, wobei die hergeleitete Bildskalierungskurve zur Bildneuskalierung in einer zweiten Richtung, die im Wesentlichen senkrecht zur ersten Richtung ist, geeignet ist.

2. Verfahren nach Anspruch 1, des Weiteren umfassend ein Neuskalieren (1213; 1317) des Bildes in der zweiten Richtung unter Verwendung der hergeleiteten Skalierungskurve.

3. Verfahren nach einem der Ansprüche 1 bis 2, wobei das Erfassen einer lokalen Auffälligkeitsstelle ein Erstellen einer zweidimensionalen Auffälligkeitsstellenabbildung bzw. -karte umfasst.

4. Verfahren nach einem der vorhergehenden Ansprüche, wobei sich die Lokalvergrößerung der Skalierungskurve der Einheit bzw. Einsgröße nähert, wenn die entsprechende akkumulierte lokale Auffälligkeitsstelle in der ersten Richtung zunimmt.

5. Verfahren nach einem der vorhergehenden Ansprüche, wobei das Akkumulieren der lokalen Auffälligkeitsstelle ein Erstellen einer eindimensionalen Projektion in der zweiten Richtung der zweidimensionalen Auffälligkeitsstellenabbildung bzw. -karte umfasst, wobei die Projektion die lokale Auffälligkeitsstelle der einzelnen Pixel in dem empfangenen Bild oder eine Kombination von lokalen Auffälligkeitsstellen über eine Gruppe von Pixeln senkrecht zur Akkumulationsrichtung projiziert.

6. Verfahren nach Anspruch 5, wobei das Herleiten einer Skalierungskurve umfasst:

   Invertieren (1309) der erstellten Projektion zur Ermittlung eines Lokalvergrößerungsfaktorprofils;
   Glätten (1311) des ermittelten Lokalvergrößerungsfaktorprofils;
   Beschränken (1313) des Lokalvergrößerungsfaktorprofils auf eine Sollbildausgabegröße durch Anpassen des Profils derart, dass das Integral des Profils auf die gewünschte Ausgabegröße passt, während die minimalen und maximalen Vergrößerungswerte des Lokalvergrößerungsfaktorprofils begrenzt werden; und
   Integrieren (1315) des Skalierungsprofils zur Ermittlung der Bildskalierungskurve.

7. Verfahren nach einem der Ansprüche 1 bis 5, wobei das Herleiten der Skalierungskurve umfasst:

   Bereitstellen (1207) eines Satzes von Anfangsbildskalierungskurven zur Abbildung von Pixeln aus dem empfangenen Bild auf ein auszugebendes Bild;
   Berechnen (1209) von Aufwandswerten für wenigstens einige der bereitgestellten Anfangsbildskalierungskurven, wobei die Aufwandswerte auf der Lokalvergrößerung der bereitgestellten Anfangsbildskalierungskurven und der akkumulierten lokalen Auffälligkeitsstelle in der ersten Richtung, auf die die bereitgestellte Anfangsbildskalierungskurve angewandt wird, basiert; und
   Herleiten (1211) der Bildskalierungskurve aus den berechneten Aufwandswerten.

8. Verfahren nach Anspruch 7, wobei die bereitgestellten Anfangsbildskalierungskurven aus verketteten und geglätteten Lokalbildskalierungskurven bestehen.

9. Verfahren nach einem der Ansprüche 7 bis 8, wobei sich die Bildskalierungskurve als gewichteter Durchschnitt der bereitgestellten Anfangsbildskalierungskurven ergibt, wobei die Gewichte mit zunehmendem Aufwand einer bereitgestellten Anfangsbildskalierungskurve abnehmen.

10. Verfahren nach einem der vorhergehenden Ansprüche, wobei die lokale Auffälligkeitsstelle die wahrgenommene Verzerrung in dem Bild für den Fall wiedergibt, dass das entsprechende Bildsegment gestreckt oder gestaucht ist.

11. Verfahren nach einem der vorhergehenden Ansprüche, wobei eine Sequenz von Bildern empfangen wird und das Verfahren auf wenigstens einige Bilder jener Sequenz angewandt wird.

**12.** Verfahren nach Anspruch 11, wobei die Erfassungs-, Akkumulations- und Herleitungsschritte des Verfahrens nur auf jedes x-te Bild der Bildsequenz angewandt werden.

**13.** Einrichtung zum Erzeugen einer Bildskalierungskurve, wobei die Einrichtung umfasst:

einen Empfänger (701A; 701 B; 701C; 701 D; 703) zum Ermitteln eines Bildes;
einen Auffälligkeitsstellendetektor (709) zum Erfassen einer lokalen Auffälligkeitsstelle des empfangenen Bildes;
einen Akkumulator (710) zum Akkumulieren der lokalen Auffälligkeitsstelle in einer ersten Richtung; und
einen Kurvenerzeuger (713) zum Herleiten einer Bildskalierungskurve aus der lokalen Auffälligkeitsstelle, wobei die hergeleitete Skalierungskurve zur Bildneuskalierung in einer zweiten Richtung, die im Wesentlichen senkrecht zur ersten Richtung ist, geeignet ist.

**14.** Einrichtung nach Anspruch 13, des Weiteren umfassend einen Speicher (715) zum Bereitstellen eines Satzes von Anfangsbildskalierungskurven und einen Aufwandsberechner (711) zum Berechnen von Aufwandswerten für wenigstens einige der bereitgestellten Bildskalierungskurven.

**15.** Einrichtung nach einem der Ansprüche 13 bis 14, des Weiteren umfassend einen Skalierer (705) zum Neuskalieren des Bildes in einer zweiten Richtung unter Verwendung der hergeleiteten Bildskalierungskurve.

**Revendications**

**1.** Procédé de génération d'une courbe de mise à l'échelle d'image, le procédé comprenant :

- la réception (1201 ; 1301) d'une image ;
- la détection (1204 ; 1304) d'une saillance locale dans l'image reçue ;
- l'accumulation (1206 ; 1306) de la saillance locale dans une première direction ; et
- la dérivation (1211 ; 1315) d'une courbe de mise à l'échelle d'image de la saillance locale accumulée, où la courbe de mise à l'échelle d'image dérivée est appropriée pour la remise à l'échelle d'image dans une seconde direction qui est sensiblement orthogonale à la première direction.

**2.** Procédé selon la revendication 1, comprenant en outre la remise à l'échelle (1213 ; 1317) de l'image dans la seconde direction en utilisant la courbe de mise à l'échelle dérivée.

**3.** Procédé selon l'une quelconque des revendications 1 à 2, dans lequel la détection d'une saillance locale comprend la création d'une carte de saillance bidimensionnelle.

**4.** Procédé selon l'une quelconque des revendications précédentes, dans lequel l'agrandissement local de la courbe de mise à l'échelle approche l'unité lorsque la saillance locale accumulée correspondante dans la première direction augmente.

**5.** Procédé selon l'une quelconque des revendications précédentes, dans lequel l'accumulation de la saillance locale comprend la création d'une projection unidimensionnelle dans la seconde direction de la carte de saillance bidimensionnelle, où la projection projette la saillance locale de pixels individuels dans l'image reçue, ou une combinaison de saillances locales sur un groupe de pixels orthogonaux à la direction d'accumulation.

**6.** Procédé selon la revendication 5, dans lequel la dérivation d'une courbe de mise à l'échelle comprend :

- l'inversion (1309) de la projection créée afin d'obtenir un profil de facteur d'agrandissement local ;
- le lissage (1311) du profil de facteur d'agrandissement local obtenu ;
- l'application d'une contrainte (1313) pour contraindre le profil de facteur d'agrandissement local à une taille de sortie d'image ciblée en adaptant le profil de sorte que l'intégrale du profil corresponde à la taille de sortie souhaitée tout en limitant les valeurs d'agrandissement minimale et maximale du profil de facteur d'agrandissement local ; et
- l'intégration (1315) du profil de mise à l'échelle afin d'obtenir la courbe de mise à l'échelle d'image.

**7.** Procédé selon l'une quelconque des revendications 1 à 5, dans lequel la dérivation de la courbe de mise à l'échelle comprend :

- la fourniture (1207) d'un ensemble de courbes de mise à l'échelle d'image initiales pour mapper des pixels de l'image reçue avec une image devant être sortie ;

- le calcul (1209) des valeurs de coût pour au moins certaines des courbes de mise à l'échelle d'image initiales fournies, les valeurs de coût étant basées sur l'agrandissement local de la courbe de mise à l'échelle d'image initiale fournie et la saillance locale accumulée dans la première direction à laquelle la courbe de mise à l'échelle d'image initiale fournie est appliquée ; et

- la dérivation (1211) de la courbe de mise à l'échelle d'image des valeurs de coût calculées.

8. Procédé selon la revendication 7, dans lequel les courbes de mise à l'échelle d'image initiales fournies se composent de courbes de mise à l'échelle d'image locales concaténées et lissées.

9. Procédé selon l'une quelconque des revendications 7 à 8, dans lequel la courbe de mise à l'échelle d'image est obtenue comme une moyenne pondérée des courbes de mise à l'échelle d'image initiales fournies où les poids diminuent avec l'augmentation du coût d'une courbe de mise à l'échelle d'image initiale fournie.

10. Procédé selon l'une quelconque des revendications précédentes, dans lequel la saillance locale reflète la distorsion perçue dans l'image dans le cas où le segment d'image correspondant est étiré ou rétréci.

11. Procédé selon l'une quelconque des revendications précédentes, dans lequel une séquence d'images est reçue et le procédé est appliqué à au moins certaines images de cette séquence.

12. Procédé selon la revendication 11, dans lequel les étapes de détection, d'accumulation et de dérivation du procédé sont appliquées uniquement à toutes les x-ièmes images de la séquence d'images.

13. Appareil pour générer une courbe de mise à l'échelle d'image, l'appareil comprenant :

- un récepteur (701A ; 701B ; 701C ; 701D ; 703) pour obtenir une image ;
- un détecteur de saillance (709) pour détecter une saillance locale de l'image reçue ;
- un accumulateur (710) pour accumuler la saillance locale dans une première direction ; et
- un générateur de courbe (713) pour dériver une courbe de mise à l'échelle d'image de la saillance locale, où la courbe de mise à l'échelle dérivée est appropriée pour la remise à l'échelle d'image dans une seconde direction qui est sensiblement orthogonale à la première direction.

14. Appareil selon la revendication 13, comprenant en outre une mémoire (715) pour fournir un ensemble de courbes de mise à l'échelle d'image initiales et un calculateur de coût (711) pour calculer des valeurs de coût pour au moins certaines des courbes de mise à l'échelle d'image fournies.

15. Appareil selon l'une quelconque des revendications 13 à 14, comprenant en outre un dispositif de mise à l'échelle (705) pour remettre à l'échelle l'image dans une seconde direction en utilisant la courbe de mise à l'échelle d'image dérivée.

FIG. 1

FIG. 2

FIG. 3

FIG. 4

FIG. 5

FIG. 6

FIG. 7

FIG. 8

FIG. 9

FIG. 10

FIG. 11

Receiving an image. —1201

Decoding the received image having a certain aspect ratio. —1203

Detecting local saliency in the image. —1204

Creating a two-dimensional saliency map. —1205

Accumulating the local saliency in a first direction for obtaining a one-dimensional projection in a second direction of the two-dimensional saliency map. —1206

Obtaining a set of initial scaling curves. —1207

Calculating costs of applying the initial scaling curves by using the accumulated local saliency in the image. —1209

Calculating a new scaling curve based on the calculated costs. —1211

Rescaling the image in a second direction by applying the new scaling curve. —1213

# FIG. 12

Receiving an image. —1301

Decoding the received image having a certain aspect ratio. —1303

Detecting local saliency in the image. —1304

Creating a two-dimensional saliency map. —1305

Accumulating the local saliency in a first direction for obtaining a one-dimensional projection in a second direction of the two-dimensional saliency map. —1306

Inverting the created projection to obtain a local magnification factor profile. —1309

Smoothing the obtained local magnification factor profile. —1311

Constraining the local magnification factor profile to a targeted image output size. —1313

Integrating the local magnification factor profile to obtain a new scaling curve. —1315

Rescaling the image in the second direction by applying the new scaling curve. —1317

FIG. 13

Saliency calculation

Rescaling

Horizontal projection

Integration

Invertion, smoothing and constriction

FIG. 14

EP 2 382 772 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7339627 B, Brian Schoner